# EUROPÄISCHE PATENTSCHRIFT

(11) **EP 2 039 566 B1**
(45) Veröffentlichungstag und Bekanntmachung des Hinweises auf die Patenterteilung: **23.06.2010**
(21) Anmeldenummer: 08164263.9
(22) Anmeldetag: 12.09.2008
(51) Int. Cl.: B60N 3/10

(54) **Vorrichtung zum Halten von Getränkebehältern**
Device for holding drinks containers
Dispositif de retenue de porte-boissons

(30) Priorität: 21.09.2007 DE 202007013287 U; 28.12.2007 DE 202007018119 U
(43) Veröffentlichungstag der Anmeldung: 25.03.2009
(73) Patentinhaber: Dr. Schneider Kunststoffwerke GmbH, 96317 Kronach (DE)
(72) Erfinder: Uhlenbusch, Olaf, 96275 Marktzeuln (DE)
(74) Vertreter: Pröll, Jürgen

(56) Entgegenhaltungen:
- EP-A- 2 014 508
- WO-A-2005/023578
- DE-A1- 10 316 817
- JP-A- 2000 052 837

## Beschreibung

Die Erfindung betrifft eine Vorrichtung zum Halten von Getränkebehältern in einem Kraftfahrzeug oder in einer Trägerplatte mit den im Oberbegriff des Anspruchs 1 angegebenen Merkmalen.

Die JP 2000 052837 A gibt eine Vorrichtung zum Halten von Getränkebehältern an, die aus einem topfähnlichen Grundkörper besteht, in welchem quer zur Längsachse mittig eine Lagerwand an dem Boden vorstehend befestigt vorgesehen ist. In einer Ausführung ist in die Lagerwand eine Lagerungsbohrung eingebracht. Auf die Lagerwand ist eine Behälterstütze mit einem Einführspalt aufsteckbar und mit einem Sicherungszapfen daran drehbar befestigt. Die Behälterstütze weist einen Handgriff auf und lässt sich um 90 ° verschwenken. Die beiden Seiten der Behälterstütze weisen Ausformungen auf, die in den beiden Drehstellungen jeweils unterschiedliche Lagerungstiefen für den Getränkebehälter mit der jeweiligen Randwand des topfähnlichen Grundkörpers bilden. In einer anderen Ausführung ist auch vorgesehen, dass auf die Lagerungswand verschiedene Trenneinsätze aufsteckbar sind, die die Fixierung unterschiedlicher Behältnisse und Gegenstände in dem wannenförmigen Behältnis ermöglichen. Diese Einsätze sind als Wechseleinsätze auf die rechteckförmige Lagerwand aufsteckbar. Im eingesetzten Zustand lassen sie sich jedoch nicht um eine vertikale Achse verdrehen und sind in keine Lagerstellen eingebettet. Wenn der Behälter mit horizontaler Achse der Behälterstütze gereinigt werden soll, so ist dies nur eingeschränkt möglich, da die um die horizontale Achse drehbare Behälterstütze nicht entnommen werden kann, da der Sicherungszapfen von Laien praktisch nicht entfernt werden kann, da er nur über den Raum des seitlichen Behälterabschnittes zugängig ist. Bei der vertikalen Lösung hemmt die Lagerwand eine leichte Reinigung. Ferner kann die Behälterstütze nur in zwei Positionen eingesetzt werden. Aus der DE 101 34 027 A1 ist ein Halter für einen Getränkebehälter zum Einbau in einer Abdeckung in einem Kraftfahrzeug mit einem beispielsweise ovalen Ablagefach bekannt, bei dem ein drehbar gelagerter Fachteiler vorgesehen ist, der eine zylinderförmige, sich über einen Teil des Umfangs erstreckende Wandung aufweist, die sich durch Drehen des Fachteilers so in das Ablagefach hineinbewegen lässt, dass sie einen in etwa zylindrischen Einstellbereich zum Einstellen beispielsweise einer Getränkedose abteilt. Die Schwenklager der Stützelemente sind außerhalb der Wand des Grundkörpers bei vertikaler Anordnung und bei horizontaler Anordnung in den Seitenwänden vorgesehen, wobei der Fachteiler eine zylindrische Grundform aufweist und in die Unterseite des Bodens eintaucht. Weder die Fachteiler mit vertikaler Schwenkachse noch die mit horizontaler Schwenkachse lassen sich entnehmen, so dass eine optimale Reinigung des Grundkörpers und der Fachteiler nicht möglich ist.

Aus der EP 2 014 508 A2 ist eine gattungsgemäße Vorrichtung in Form eines Ablagefaches bekannt, das aus der Draufsicht in Form zweier sich schneidender Kreise gebildeter Behälterteile besteht. In einem der beiden Teile ist von oben ein Fachteiler um eine vertikale Achse drehbar und auswechselbar eingesetzt, der eine zylinderförmige Grundstruktur mit einer Ausnehmung an der Umfangstelle aufweist. Durch Drehen des Fachteilers um die vertikale Achse lässt sich die Größe des Halters für einen Getränkebehälter im Ablagefach ändern. Durch Entnehmen des Fachteilers lässt sich das Ablagefach in seiner gesamten Größe nutzen. Der Fachteiler lässt sich gegen andere Fachteiler mit anderen Konturen austauschen, sowie durch solche, die oben offen sind und als Ablagefach dienen. Die Fachteiler müssen stets so ausgebildet sein, dass sie sich in dem kreisförmigen Teilbehälter mit Teilen der Außenwand abstützen können, wodurch zwei gleichgroße Getränkebehälter, beispielsweise in die Behälterteile, nicht einsetzbar sind, wenn ein Fachteiler eingesetzt ist.

Aus der WO 2005/023578 A2 ist eine zylinderförmig abgestufte Vorrichtung zum Halten von Getränkebehältern in einem Kraftfahrzeug bekannt, wobei der obere zylinderförmige Abschnitt einen größeren Durchmesser als der untere aufweist. In diese so gebildete stufenförmige Ausformung lassen sich zur Anpassung des Durchmessers an verschiedene Getränkebehälter federnde Ringeinsätze einsetzen, sowie unterschiedliche Böden, beispielsweise ein solcher aus saugfähigem Material. Des Weiteren ist in einer Ausführung ein Einsatz vorgesehen, der obenseitig eine Aufnahmeöffnung mit elastischer Ringwand aufweist, um eine Getränkedose mit der Federkraft der Ringwand zu halten, die sich untenseitig auf einem Boden aus saugfähigem Material abstützt. Dieser Behälter ist austauschbar und kann nach oben abgezogen werden.

Aus der DE 103 16 817 A1 ist ferner eine Haltevorrichtung für Getränkebehälter in einem Ablagefach in einem Fahrzeug bekannt, das Längs- und Querwandungen aufweist. In dem Ablagefach ist lösbar ein Halterungselement mit wenigstens einer Anlagefläche für wenigstens einen Getränkebehälter angeordnet. An der Längswandung des Behälters sind Klemmaufnahmen für das Halteelement angeordnet. Der zu haltende Getränkebehälter ist zwischen den Anlageflächen und der Querwand klemmfixiert. Das Halterungselement ist weder drehbar noch entnehmbar angeordnet. Es lässt sich allerdings seitlich verschieben.

Aus der DE 103 59 294 A1 ist eine Halterung für Getränkebehälter in einem Kraftfahrzeug bekannt, die einen Grundkörper mit einem Aufbewahrungsplatz für einen Getränkebehälter sowie verschiebbare Getränkebehälterstützen zum Sichern des in dem Gehäuse untergebrachten Getränkebehälters aufweist. Die Getränkebehälterstütze ist seitlich in einer Führung gelagert und weist bolzenförmige Verriegelungselemente auf, die durch Betätigen einer Drucktaste bewegt werden können. Die Ausbildung der Getränkebehälterstützen ist sehr aufwändig, da sie mechanische Betätigungsmittel und Rastmittel aufweisen müssen. Ferner ist eine Verstellung nur in Längsrichtung des Grundkörpers möglich, wobei immer nur eine Seite zur Bestimmung der Öffnungsweite des Behälters zur Aufnahme des Trinkbehälters beiträgt und keine Veränderung vorgenommen werden kann. Durch die Art der Lagerung besteht darüber hinaus die Gefahr, dass austretende Flüssigkeiten über die Anzahl der Lagerungsbohrungen aus dem Behälter heraustreten können.

Eine ähnliche Konstruktion ist aus der DE 10 2005 037 188 A1 bekannt. Die verschiebbare Trennwand ist dabei zusätzlich an einer Seite verschwenkbar, so dass die gesamte Behälterfläche beim Verschwenken der Trennwand zu einer Seitenwand zum Beschicken zur Verfügung steht. Eine Halterung mit versetzbaren Getränkebehälterstützen, die in Führungen an den Seitenwänden von oben einschiebbar sind, ist ferner aus der DE 20 2005 003 636 U1 bekannt.

In DE 199 61 174 A1 wird eine Vorrichtung zur Abstützung von Getränkebehältern beschrieben, bei der in einem Rahmen eine Öffnung mit einem federnden Klemmelement ausgestaltet ist. Sofern in die Öffnung eine Flasche oder Dose eingeführt wird, bewirkt das Klemmelement eine Radialkraft auf den Getränkebehälter und klemmt diesen fest. Somit können Getränkebehälter unterschiedlicher Durchmesser lagestabil abgestützt werden. Allerdings erfordert die stabile Abstützung eine relativ hohe Spannkraft am Klemmelement, die folglich auch vom Nutzer beim Einführen oder Entnehmen einer Flasche oder Dose aufgebracht werden muss und eine einfache Handhabung der Vorrichtung beeinträchtigt.

Aus DE 44 04 078 A1 ist eine Vorrichtung zum Halten von Getränkebehältern mit einem aus zwei Hälften zusammengefügten Haltering bekannt. Die beiden Ringhälften sind über Drehgelenke miteinander verbunden und aus einer zusammengeklappten Ruhestellung in eine Haltestellung verlagerbar. Eine Hälfte vom Haltering weist ein schwenkbares Klemmteil auf, das mittels Federkraft an die aufzunehmende Flasche oder Dose gedrückt wird und somit eine Anpassung der Vorrichtung an Getränkebehälter mit unterschiedlichen Durchmessern ermöglicht. Allerdings liegt das Klemmteil nur auf einem kleinen Abschnitt der Umfangsfläche an, so dass während der Fahrt eines Kraftfahrzeuges keine stabile Halterung gewährleistet ist. Weiterhin erfordert ein Wechsel zwischen der Ruhe- und Haltestellung einen aufwendigen Bewegungsablauf, der durch zahlreiche Einzelteile mit komplizierten Konturen realisiert wird.

In DE 199 50 889 A1 wird eine Vorrichtung mit einem zylinderförmigen Grundkörper zur Aufnahme eines Getränkebehälters beschrieben. Der Querschnitt des Grundkörpers kann mittels Lamellen an den Durchmesser des jeweils konkreten Getränkebehälters angepasst werden. Hierbei werden die am Grundkörper gelagerten Lamellen mit einem ähnlichen Bewegungsablauf wie bei einer Irisblende verstellt, so dass mit jeder Lamelle jeweils eine punktförmige Abstützung der aufzunehmenden Flasche oder Dose erzielt wird.

Aus DE 197 29 689 A1 ist eine weitere Vorrichtung mit zylinderförmigem Grundkörper zur Aufnahme eines Getränkebehälters bekannt. Hierbei sind an der Zylindermantelfläche des Grundkörpers mehrere Durchbrüche ausgestaltet, in denen jeweils eine mit Federkraft beaufschlagte Haltebacke schwenkbeweglich gelagert ist. Somit ist eine selbsttätige Anpassung an Getränkebehälter unterschiedlicher Durchmesser möglich. Allerdings wird mit den Haltebacken nur eine punktförmige Abstützung der Flasche oder Dose erreicht.

Während die oben benannten Konstruktionen zur Aufnahme von lediglich einem Getränkebehälter konzipiert sind, beschreibt DE 103 59 294 A1 eine Vorrichtung mit einem topfähnlichen Grundkörper, in dem mehrere Getränkebehälter abgestützt werden können. Hierfür sind im Innenraum des Grundkörpers an zwei parallel zueinander verlaufenden Wandabschnitten Führungsschienen angeordnet, in denen mindestens eine Behälterstütze verschiebbar geführt wird. Durch Verlagerung dieser Behälterstütze werden innerhalb des Grundkörpers unterschiedliche freie Konturen ausgebildet, in denen jeweils Getränkebehälter mit auch unterschiedlichem Querschnitt abgestützt werden können. Der Behälterstütze ist eine Rastmechanik zugeordnet, die zahlreiche, teilweise komplizierte Einzelteile aufweist und mit einem vom Nutzer betätigbaren Druckknopf gelöst oder gesperrt wird. Dabei muss der Nutzer zur Verlagerung der Behälterstütze zunächst den Druckknopf betätigen, danach bei eingedrücktem Druckknopf die Behälterstütze verschieben und gleichzeitig die Relativlage von Befestigungsloch und Rastvorsprung "erfühlen", um eine Position auszuwählen, die weitgehend der Kontur des konkreten Getränkebehälters entspricht. Neben dieser umständlichen Handhabung ist nachteilig, dass sich diese Vorrichtung sehr schlecht reinigen lässt, weil der Innenraum des Grundkörpers durch die zahlreichen Bauteile kaum zugänglich ist.

Aufgabe der Erfindung ist es, eine Vorrichtung zum Halten von Getränkebehältern zu schaffen, die für eine gleichzeitige Abstützung von Getränkebehältern gleicher oder unterschiedlicher Durchmesser und Konturen geeignet ist, einen geringen Bauteilaufwand erfordert, eine robuste Bauweise aufweist und gut zu reinigen ist.

Die Aufgabe löst die Erfindung durch Vorrichtungen, wie sie in den Ansprüchen 1/2 angegeben sind. Vorteilhafte Ausgestaltungen sind Gegenstand der abhängigen Ansprüche, deren Merkmale im Ausführungsbeispiel näher beschrieben werden.

Die Vorrichtung nach der Erfindung zeichnet sich dadurch aus, dass die Behälterstütze als eine dreh- und entnehmbare Baugruppe ausgestaltet ist, wobei die Baugruppe eine horizontale oder vertikale Drehachse aufweist und innerhalb des Grundkörpers in einer Lagerkammer, im Randbereich einer Behälterstüte oder in einer Ausnehmung oder in einer Lagerkammer zwischen mindestens zwei benachbarten Behälterstützen im Grundkörper lagefixiert angeordnet ist und durch Drehung der Baugruppe die Lagerweite der Behälterstüte veränderbar ist. Hierdurch ist eine besonders einfache Konstruktion gegeben, die es ermöglicht, die Baugruppe auf einfache Weise einzusetzen, durch Drehung eine individuelle Anpassung der Weite einer Getränkebehältnisaufnahme zu ermöglichen und zum Zwecke der Reinigung die Baugruppe auf einfache Weise wieder zu entfernen. Dies gilt sowohl bei Anordnung um eine horizontale Drehachse als auch bei Anbringung auf einer vertikalen Achse.

Eine ausgestaltete Vorrichtung besteht aus einem topfähnlichen Grundkörper mit einer Behälterstütze. Diese Behälterstütze ist als drehbare Baugruppe ausgestaltet, wobei die Drehachse innerhalb des Grundkörpers lagefixiert angeordnet ist. Die Drehachse, welche die Bewegungsmöglichkeiten der drehbaren Baugruppe bestimmt, kann rechtwinklig zur Längsachse des Grundkörpers oder alternativ in Richtung der Längsachse des Grundkörpers verlaufen. Bei einer vertikalen Anordnung der drehbaren Baugruppe mit folglich in Längsachse des Grundkörpers verlaufender Drehachse werden die jeweiligen Getränkebehälter mittels der Behälterstütze auf einem großen Abschnitt Ihrer Außenkontur abgestützt, so dass mit dieser Ausgestaltung eine besonders wirksame Lagefixierung gewährleistet ist.

Die drehbare Baugruppe kann unterschiedlich ausgestaltet werden. In einer bevorzugten Variante weist diese Baugruppe eine quaderähnliche Kontur auf. Hierbei werden die beiden Seitenflächen, die rechtwinklig zur Drehachse der drehbaren Baugruppe verlaufen, mit einer ebenen Kontur ausgestaltet. Somit wird eine gute Anpassung an den jeweils zugeordneten und ebenfalls ebenen Konturabschnitt im Innenraum des Grundkörpers erzielt.

Als vorteilhafte Ausgestaltung wird vorgeschlagen, dass zumindest eine der Seitenflächen, die annähernd parallel zur Drehachse der drehbaren Baugruppe verlaufen, eine konkave Kontur aufweist. Ebenso können auch zwei gegenüberliegende oder auch alle vier annähernd parallel zur Drehachse verlaufenden Seitenflächen eine konkave Kontur aufweisen. Die konkaven Konturen bewirken eine gute Abstützung von Getränkebehältern mit einem kreisförmigen Querschnitt.

Als alternative Ausgestaltung wird vorgeschlagen, dass zumindest eine der Seitenflächen, die annähernd parallel zur Drehachse der drehbaren Baugruppe verlaufen, eine konvexe Kontur aufweist. Mit einer konvexen Kontur wird die Anzahl der möglichen Abstützungen weiter erhöht, weil hierbei eine stufenlose und sanfte Klemmung weiterer Durchmesser möglich ist.

Als eine spezielle Ausführung der konkaven Variante wird vorgeschlagen, dass eine der Seitenflächen, die annähernd parallel zur Drehachse der drehbaren Baugruppe verlaufen, halbkreisbogenförmig ausgestaltet ist. Hierbei kann in der Kontur dieser Seitenfläche eine zusätzliche muldenartige Vertiefung ausgestaltet werden. Eine derartige Vertiefung bewirkt bei einer annähernd vertikalen Position durch die Anlage an der Außenkontur des Getränkebehälters eine rastähnliche Lagefixierung. Ebenso ist es möglich, dass die bei einer anderen Stellung der drehbaren Baugruppe annähernd horizontal verlaufende muldenartige Vertiefung als Ablage genutzt wird, beispielsweise für Parkmünzen.

Die drehbare Baugruppe kann als Alternative zur quaderähnlichen Kontur auch mit einer zylinderähnlichen Kontur ausgestaltet werden. Hierbei werden die beiden Seitenflächen, die rechtwinklig zur Drehachse der drehbaren Baugruppe verlaufen, ebenfalls mit einer ebenen Kontur ausgestaltet. Somit wird eine gute Anpassung an den jeweils zugeordneten und ebenfalls ebenen Konturabschnitt im Innenraum des Grundkörpers erzielt.

In weiterer Ausgestaltung einer zylinderähnlichen Kontur der drehbaren Baugruppe wird vorgeschlagen, dass in der Mantelfläche, die annähernd parallel zur Drehachse verläuft, mindestens zwei teilkreisbogenförmige Ausnehmungen ausgestaltet sind. Diese Ausnehmungen bewirken eine gute Abstützung von Getränkebehältern mit einem kreisförmigen Querschnitt.

Damit zumindest zwei Getränkebehälter aufgenommen werden können, weist der Grundkörper mindestens zwei Innenkonturabschnitte auf, die mit einer gleichen als auch mit einer unterschiedlichen Form ausgestaltet werden können. Hierbei sind sowohl lediglich teilkreisbogenförmige oder polygonale Konturen als auch Kombinationen solcher Konturen möglich. Teilkreisbogenförmige Varianten bewirken eine sehr gute Abstützung von Getränkebehältern mit einem kreisförmigen Querschnitt, insbesondere von Flaschen, Dosen oder auch Tassen. Hingegen bewirken polygonale Formen eine gute Abstützung von Getränkebehältern mit eckigem Querschnitt, die insbesondere als sog. Tetrapacks bekannt sind.

Die Anzahl und Formenvielfalt der aufzunehmenden Getränkebehälter kann mit geringem Aufwand erhöht werden, indem nicht nur zwei, sondern beispielsweise drei oder vier separate Innenkonturabschnitte ausgestaltet werden. Durch Kombination dieser Innenkonturabschnitte mit lediglich einer drehbaren Behälterstütze können zahlreiche Varianten für eine Abstützung von mehreren Flaschen, Dosen, Tassen und dergleichen Behältern realisiert werden.

Die erfindungsgemäße Vorrichtung weist eine robuste Bauweise auf und ermöglicht eine gleichzeitige Abstützung von mehreren Getränkebehältern unterschiedlicher Durchmesser und Konturen. Hierfür ist eine lediglich geringe Anzahl von Bauteilen notwendig. Dies sind erhebliche Vorteile gegenüber anderen Konstruktionen mit oftmals zahlreichen kosten- und montageaufwendigen Baugruppen. Ein weiterer Vorteil besteht darin, dass der Innenraum des Grundkörpers gut zugänglich ist, so dass die Vorrichtung problemlos zu reinigen ist.

Diese Vorrichtung kann in verschiedenartigen Trägerbaugruppen montiert werden, beispielsweise in einem Servierwagen für die Gastronomie. Eine bevorzugte Anwendung ist die Nutzung als "Cupholder" zur Abstützung von Flaschen, Dosen und ähnlichen Behältnissen in einem Kraftfahrzeug.

Für die Lagerung der Baugruppe gibt es diverse Möglichkeiten. Eine Möglichkeit besteht darin, dass die um eine horizontale Drehachse verschwenkbare Baugruppe beidseitig gelagert ist und dass die Baugruppe an den Stirnseiten vorstehende Lagerzapfen mit einseitigen Fasen aufweist, die unter Ausnutzung der Elastizität der Lagerungswände im Grundkörper in Lagerungsbohrungen von oben einschiebbar sind, wobei die Fasen die Lagerwände voneinander drücken und bei Drehung der Baugruppe um 180° die Zapfen aus den Lagerungsbohrungen herausziehbar sind. Zur leichteren Einführung in die Lagerstellen können in den Lagerwänden nutenförmige Einführkanäle für die Lagerzapfen vorgesehen sein. Bei kinematischer Umkehr können an den Lagerwänden vorstehende Lagerzapfen und in den Stirnflächen der Baugruppe Lagerungsbohrungen vorgesehen sein.

Bei vertikaler Drehachse kann am Boden des Grundkörpers mindestens ein Drehzapfen vorstehend angebracht sein, auf den die Baugruppe mit einer an der Unterseite in den Innenraum vorstehende, zylindrische Führung aufsteckbar ist. Es können aber auch mehrere vorstehende Lagerzapfen in bestimmter Anordnung vorgesehen sein, auf die die Baugruppe mit untenseitig in der Stirnwand eingebrachten Bohrungen oder Lagerhülsen in verschiedenen Drehpositionen aufsteckbar ist. In kinematischer Umkehr können selbstverständlich auch in dem Boden Ausnehmungen eingebracht sein oder hülsenförmige Lagerungen oder auch Bohrungen, in die ein untenseitig vorstehender Zapfen an der Baugruppe eingesteckt werden kann. Grundsätzlich können anstelle von runden Zapfen beispielsweise quadratische oder andere polygonale Verbindungen verwendet werden, beispielsweise auch dreieckige. Diese Ausbildung kann sowohl bei vertikaler Drehachse als auch bei horizontaler Achse zur Anwendung kommen. Im Falle der horizontalen Achse muss die Wandung der Lagerungsbohrung entweder aus elastischem Material bestehen oder rund ausgebildet sein, um eine Drehung zu ermöglichen. Es kann aber auch vorgesehen sein, dass die Baugruppe zunächst aus dem Grundkörper herausgenommen wird, entsprechend der Anzahl der Drehmöglichkeiten in eine bestimmte Drehstellung gebracht und dann wieder in die eckige Lagerausnehmung mit dem konturenangepassten Zapfen eingesetzt wird.

Der Grundkörper und die Baugruppe sind aus Kunststoff hergestellt und somit sehr preiswert und können an den Außenwänden des Grundkörpers Rastmittel zum Einbau in eine Trägerwand im Innenraum eines Kraftfahrzeuges aufweisen.

Nachfolgend wird die Erfindung anhand der Zeichnung ergänzend erläutert. Es zeigen:
- Fig. 1: den grundsätzlichen Aufbau einer ersten Ausfüh- rung einer erfindungsgemäßen Vorrichtung in perspektivischer Ansicht;
- Fig. 2: die Vorrichtung gemäß Fig. 1 in der Draufsicht;
- Fig. 3: die Vorrichtung gemäß Fig. 1 in der Draufsicht mit einer anderen Stellung der Behälterstütze;
- Fig. 4: die Vorrichtung gemäß Fig. 1 in der Draufsicht mit einer nochmals anderen Stellung der Behäl- terstütze;
- Fig. 5: den grundsätzlichen Aufbau einer zweiten Aus- führung einer erfindungsgemäßen Vorrichtung in perspektivischer Ansicht;
- Fig. 6: die Vorrichtung gemäß Fig. 5 in der Draufsicht;
- Fig. 7: die Vorrichtung gemäß Fig. 5 in der Draufsicht mit einer anderen Stellung der Behälterstütze;
- Fig. 8: die Vorrichtung gemäß Fig. 5 in der Draufsicht mit einer nochmals anderen Stellung der Behäl- terstütze;
- Fig. 9: den grundsätzlichen Aufbau einer dritten Aus- führung einer erfindungsgemäßen Vorrichtung in perspektivischer Ansicht;
- Fig. 10: die Vorrichtung gemäß Fig. 9 in der Draufsicht;
- Fig. 11: die Vorrichtung gemäß Fig. 9 in der Draufsicht mit einer anderen Stellung der Behälterstütze;
- Fig. 12: eine weitere Ausführung in der Draufsicht;
- Fig. 13: eine weitere Ausführung in der Draufsicht;
- Fig. 14: eine weitere Ausführung in der Draufsicht;
- Fig. 15: eine weitere Ausführung in der Draufsicht;
- Fig. 16: eine weitere Ausführung in der Draufsicht;
- Fig. 17: eine weitere Ausführung in der Draufsicht;
- Fig. 18: eine weitere Ausführung in der Draufsicht;
- Fig. 19: einen Schnitt durch einen Grundkörper im Be- reich der Anordnung einer Behälterstütze mit horizontaler Schwenkachse;
- Fig. 20: eine Draufsicht auf einen Grundkörper mit zwei Behälterabstützungen und einer dazwischen vor- gesehenen Lagerkammer zur Aufnahme einer Behäl- terstütze und
- Fig. 21: eine Behälterstütze mit Lagerhülsen.

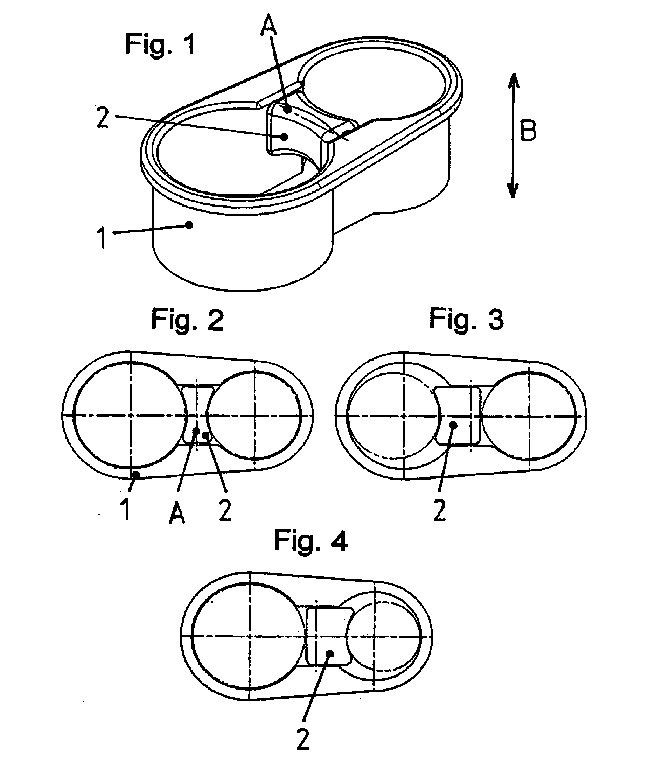

Gemäß Fig. 1 besteht die Vorrichtung zum Halten von Getränkebehältern in einem Kraftfahrzeug oder in einer Trägerplatte aus einem topfähnlichen Grundkörper 1 zur Aufnahme von Flaschen, Dosen, Tassen oder ähnlichen Behältnissen, wobei derartige Objekte in der Zeichnung nicht dargestellt sind. Im Innenraum des Grundkörpers 1 ist eine Behälterstütze 2 angeordnet. Durch Verlagerung dieser Behälterstütze 2 werden innerhalb des Grundkörpers 1 unterschiedliche Konturen ausgebildet, in denen jeweils Flaschen, Dosen oder ähnliche Behältnisse mit auch unterschiedlichem Querschnitt abgestützt werden können. Hierfür ist die Behälterstütze 2 als eine drehbare Baugruppe ausgestaltet, wobei die Drehachse A dieser Baugruppe 2 innerhalb des Grundkörpers 1 lagefixiert angeordnet ist.

Fig. 1 bis Fig. 8 zeigen Ausführungen, bei denen die Drehachse A der Baugruppe 2 rechtwinklig zur Längsachse B des Grundkörpers 1 verläuft.

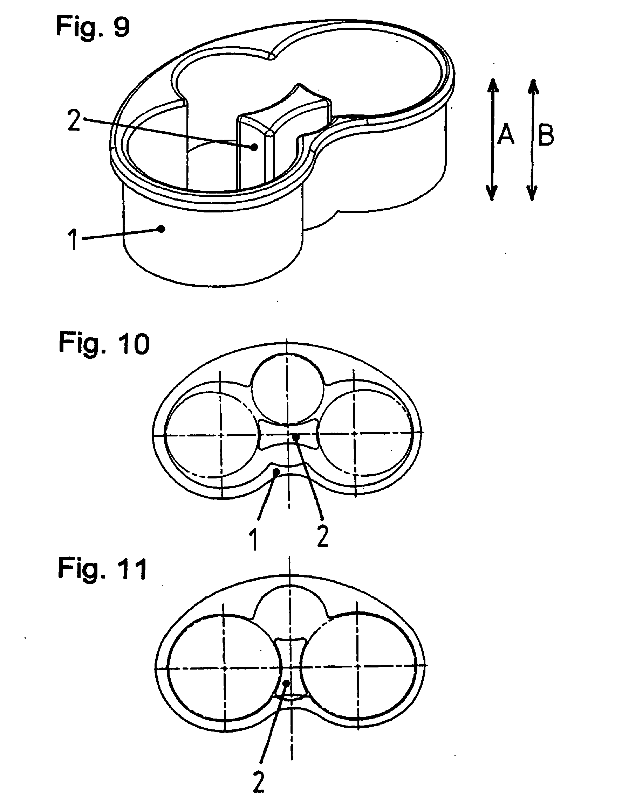

Fig. 9 bis Fig. 18 zeigen Ausführungen, bei denen die Drehachse A der drehbaren Baugruppe 2 in Richtung der Längsachse B des Grundkörpers 1 verläuft.

Unabhängig von der jeweils konkreten Ausrichtung der Drehachse A weist die drehbare Baugruppe 2 in einer bevorzugten Ausführung eine quaderähnliche Kontur auf. Hierbei ist es zweckmäßig, dass die beiden Seitenflächen, die rechtwinklig zur Drehachse A der Baugruppe 2 verlaufen, eine ebene Kontur aufweisen. Dies trifft für alle in der Zeichnung dargestellten Varianten zu.

Vorteile ergeben sind, sofern zumindest eine der Seitenflächen, die annähernd parallel zur Drehachse A der drehbaren Baugruppe 2 verlaufen, eine konkave Kontur aufweist. Ebenso können zwei, drei oder auch alle vier der annähernd parallel zur Drehachse A verlaufenden Seitenflächen der drehbaren Baugruppe 2 eine konkave Kontur aufweisen. Bei der in Fig. 1 bis Fig. 4 dargestellten Ausführung weist die Baugruppe 2 drei konkave Seitenflächen auf, wobei aus diesen Figuren die möglichen Abstützvarianten ersichtlich sind.

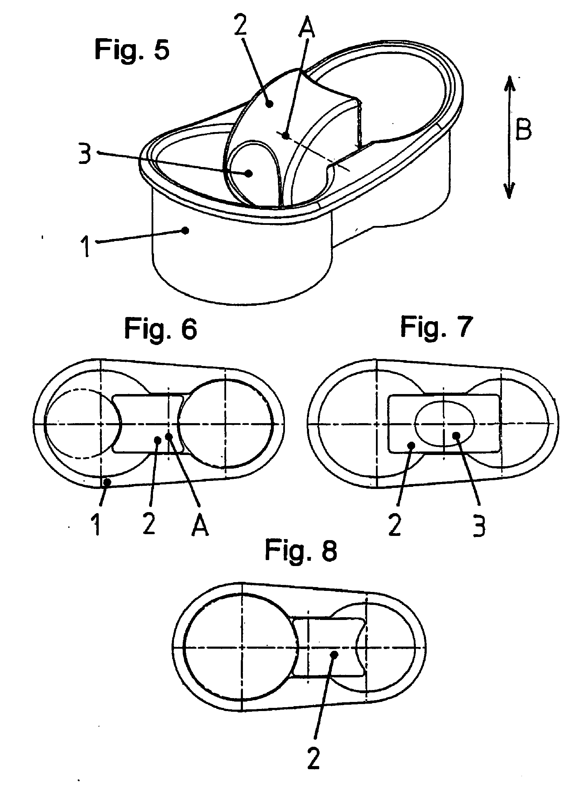

Gemäß Fig. 5 bis Fig. 8 weist eine der Seitenflächen, die annähernd parallel zur Drehachse A der drehbaren Baugruppe 2 verlaufen, eine konvexe Kontur auf. In der hier konkret dargestellten Ausführung ist diese konvexe Seitenfläche halbkreisbogenförmig und mit einer muldenartigen Vertiefung 3 ausgestaltet. Die somit möglichen Abstützvarianten sind aus Fig. 5 bis Fig. 8 ersichtlich. Fig. 7 zeigt eine Position, in der die muldenartige Vertiefung 3 auch als Ablage nutzbar ist.

Bei Anordnung der drehbaren Baugruppe 2 mit Ausrichtung der Drehachse A rechtwinklig zur Längsachse B des Grundkörpers 1, wie beispielhaft in Fig. 1 bis Fig. 8 dargestellt, ist die Anzahl der möglichen Abstützvarianten begrenzt. Hingegen ermöglicht die Ausrichtung der Drehachse A in Richtung der Längsachse B des Grundkörpers 1 zahlreiche Varianten hinsichtlich der Anzahl und Formenvielfalt der aufzunehmenden Getränkebehälter, von denen lediglich beispielsweise einige Ausführungen in Fig. 9 bis Fig. 18 dargestellt sind.

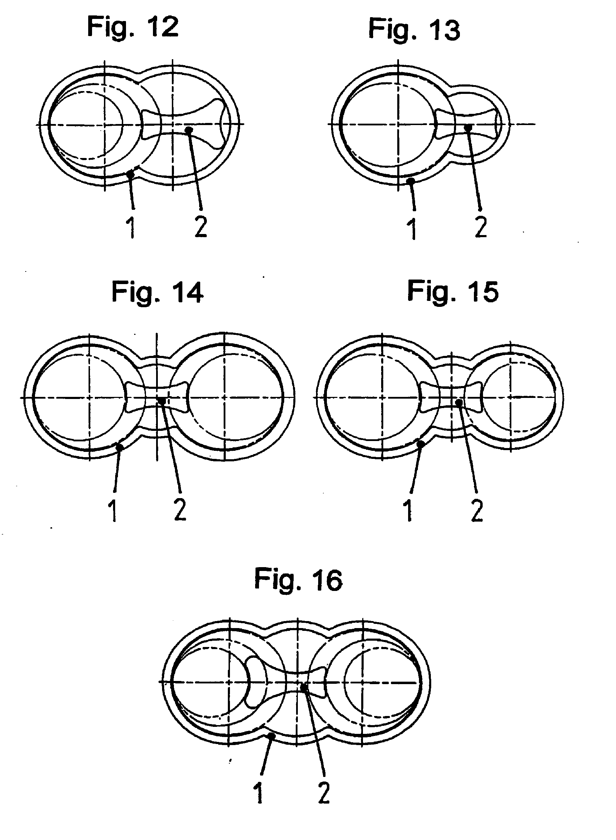

Bei den in Fig. 9 bis Fig. 17 gezeigten Ausführungen mit Ausrichtung der Drehachse A in Längsachse B des Grundkörpers 1 ist die drehbare Baugruppe 2 jeweils quaderähnlich ausgestaltet und weist an allen Seitenflächen, die annähernd parallel zur Drehachse A verlaufen, eine konkave Kontur auf. Hierbei zeigen Fig. 12 und Fig. 16 Varianten, bei denen die Quaderkontur von zwei gegenüberliegenden Seitenflächen mit jeweils etwas unterschiedlicher Breite ausgebildet worden ist.

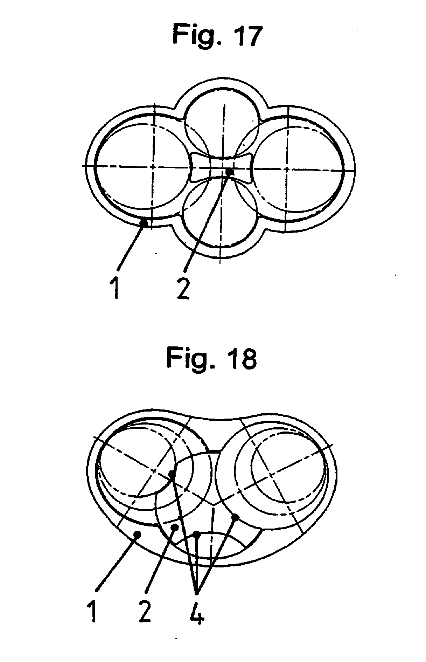

Bei der Ausführung gemäß Fig. 18 weist die drehbare Baugruppe 2 eine zylinderähnliche Kontur auf. Hierbei sind in der Mantelfläche, die annähernd parallel zur Drehachse A verläuft, drei teilkreisbogenförmige Ausnehmungen 4 ausgestaltet, deren Kontur eine vollflächige Abstützung von Getränkebehältern mit kreisförmigem Querschnitt bewirkt.

Die Anzahl und Form der im Grundkörper 1 ausgestalteten Innenkonturabschnitte kann in Abhängigkeit der jeweils angestrebten Nutzungsvielfalt unterschiedlich gewählt werden. Hierbei kann in Kombination mit lediglich einer drehbaren Baugruppe 2, deren Form und Position letztlich die Abstützvarianten bestimmt, eine Vielzahl von Lösungen realisiert werden. So zeigen Fig. 1 bis Fig. 8, Fig. 12 bis Fig. 16 und Fig. 18 Ausgestaltungen, mit denen ein oder zwei Getränkebehälter abgestützt werden können. Bei der Variante gemäß Fig. 9 bis Fig. 11 ist eine Abstützung von maximal drei und mit der Variante gemäß Fig. 17 ist eine Abstützung von maximal vier Flaschen, Dosen, Tassen oder ähnlichen Behältnissen möglich.

Alternativ zu einer - in der Zeichnung dargestellten - teilkreisbogenförmigen Ausgestaltung können die Innenkonturabschnitte des Grundkörpers 1 polygonal ausgestaltet werden, wobei dies Vorteile für eine Abstützung von eckigen Getränkebehältern (z.B. Tetrapack) ergibt. Bei einer derartigen Variante wird die drehbare Baugruppe 2 unter Verzicht auf konkave oder konvexe Abschnitte vorzugsweise als Quader mit geraden Seitenflächen ausgestaltet.

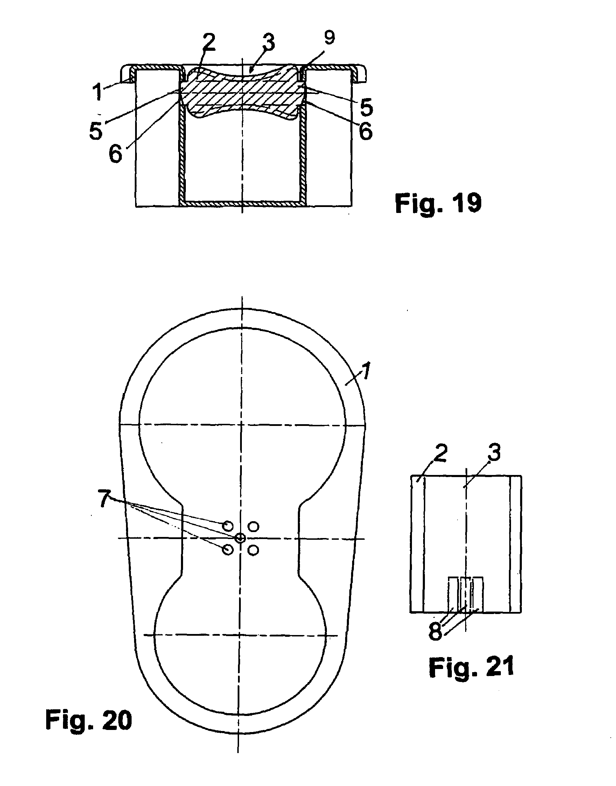

Fig. 19 zeigt in einer vereinfachten Schnittzeichnung die Lagerung einer drehbaren Baugruppe 2 um eine horizontale Achse. Zu diesem Zweck sind in den Seitenwänden des Grundkörpers 1 auf gleicher Höhe zwei Lagerbohrungen eingebracht, in die die an den Stirnseiten der Baugruppe 2 vorstehenden Lagerzapfen 5 rastend eingreifen, wenn die Baugruppe 2 von oben auf die Seitenwände aufgesetzt und diese durch die vorgesehenen Fasen 6 beim Niederdrücken auseinandergedrückt werden, bis die Lagerzapfen 5 einrasten. Die Rastverbindung nutzt also die Elastizität der Seitenwände des Grundkörpers 1 aus. Zur leichteren Einführung kann ein trichterförmiger Einführkanal 9 in die Seitenwand eingeformt sein. Es ist ersichtlich, dass nun die Baugruppe 2 mit ihren unterschiedlichen muldenartigen Vertiefungen 3 an ihren vier Seiten in eine gewünschte Drehstellung verbringbar ist, um beispielsweise einen Becher oder eine Getränkedose in der Behälterabstützung gesichert halten zu können. Soll die Baugruppe 2 herausgenommen werden, so ist eine 180°-Drehung erforderlich, um über die Fasen 6 bei leichtem Auseinanderdrücken der Seitenwände ein Ausrücken der Lagerzapfen aus den Lagerbohrungen zu ermöglichen.

In den Fig. 20 und 21 ist ein anderes Ausführungsbeispiel dargestellt. In der Zwischenkammer zwischen den beiden Behälterabstützungen des Grundkörpers 1 sind symmetrisch fünf Zapfen 7 am Boden vorstehend befestigt. Auf diese Zapfen kann die Baugruppe 2, die hier vertikal gelagert ist, in die verschiedenen Drehpositionen verschwenkt, mit ihren Lagerhülsen 8 aufgesteckt werden. Die Baugrupe 2 weist auch in diesem Fall an ihren Seiten unterschiedliche Lagerausnehmungen 3 auf, so dass auch hierüber eine individuelle Anpassung der Öffnungsweite in der Behälterabstützung an die Behälter, die einzusetzen sind, möglich ist.

### Bezugszeichenliste

- 1: Grundkörper
- 2: Behälterstütze / drehbare Baugruppe
- 3: muldenartige Vertiefung
- 4: teilkreisbogenförmige Ausnehmung
- 5: Lagerzapfen
- 6: Fase
- 7: Zapfen
- 8: Lagerhülse
- 9: Einführkanal

- A: Drehachse der Behälterstütze
- B: Längsachse des Grundkörpers

## Patentansprüche

1. Vorrichtung zum Halten von Getränkebehältern in einem Kraftfahrzeug oder in einer Trägerplatte, bestehend aus einem topfähnlichen Grundkörper, in dessen Innenraum mindestens eine Behälterstütze angeordnet ist, wobei durch eine Verlagerung der Behälterstütze unterschiedliche Konturen innerhalb des Grundkörpers ausgebildet werden, in denen jeweils Flaschen, Dosen oder ähnliche Behältnisse mit auch unterschiedlichem Querschnitt abgestützt werden können, wobei die Behälterstütze als eine dreh- und entnehmbare Baugruppe ausgestaltet ist, **dadurch gekennzeichnet, dass** die Baugruppe (2) eine horizontale Drehachse aufweist und innerhalb des Grundkörpers (1) in einer Lagerkammer, im Randbereich einer Behälterstütze, in einer Ausnehmung oder in einer Lagerkammer zwischen mindestens zwei benachbarten Behälterstützen im Grundkörper lagefixiert und entnehmbar angeordnet ist und durch Drehung der Baugruppe (2) die Lagerweite der Behälterstütze veränderbar ist.

2. Vorrichtung zum Halten von Getränkebehältern in einem Kraftfahrzeug oder in einer Trägerplatte, bestehend aus einem topfähnlichen Grundkörper, in dessen Innenraum mindestens eine Behälterstütze angeordnet ist, wobei durch eine Verlagerung der Behälterstütze unterschiedliche Konturen innerhalb des Grundkörpers ausgebildet werden, in denen jeweils Flaschen, Dosen oder ähnliche Behältnisse mit auch unterschiedlichem Querschnitt abgestützt werden können, wobei die Behälterstütze als eine dreh- und entnehmbare Baugruppe ausgestaltet ist, **dadurch gekennzeichnet,dass** bei vertikaler Drehachse am Boden des Grundkörpers (1) mindestens ein Drehzapfen vorstehend angebracht ist, auf den die Baugruppe (2) mit einer an der Unterseite in den Innenraum vorstehenden, zylindrischen Führung aufsteckbar ist oder dass mindestens eine Lageraufnahme im Boden für mindestens einen an der Unterseite der Baugruppe (2) vorstehenden Zapfen vorgesehen ist oder dass mehrere Lagerzapfen in bestimmter Anordnung vorgesehen sind, die mit Ausnehmungen an dem Gegenkörper derart zusammenwirken, dass die Baugruppe (2) in verschiedene Drehpositionen und/oder auch seitlich versetzt anordenbar ist.

3. Vorrichtung nach Anspruch 1 oder 2, **dadurch gekennzeichnet, dass** die drehbare Baugruppe (2) eine quaderähnliche Kontur aufweist.

4. Vorrichtung nach Anspruch 3, **dadurch gekennzeichnet, dass** die beiden Seitenflächen, die rechtwinklig zur Drehachse (A) der drehbaren Baugruppe (2) verlaufen, eine ebene Kontur aufweisen.

5. Vorrichtung nach Anspruch 3, **dadurch gekennzeichnet, dass** zumindest eine der Seitenflächen, die annähernd parallel zur Drehachse (A) der drehbaren Baugruppe (2) verlaufen, eine konkave Kontur aufweist oder
dass alle vier Seitenflächen, die annähernd parallel zur Drehachse (A) der drehbaren Baugruppe (2) verlaufen, eine konkave Kontur aufweisen.

6. Vorrichtung nach Anspruch 3, **dadurch gekennzeichnet, dass** zumindest eine der Seitenflächen, die annähernd parallel zur Drehachse (A) der drehbaren Baugruppe (2) verlaufen, eine konvexe Kontur aufweist oder zumindest eine der Seitenflächen, die annähernd parallel zur Drehachse (A) der drehbaren Baugruppe (2) verlaufen, halbkreisbogenförmig ausgestaltet ist und eine muldenartige Vertiefung (3) aufweist.

7. Vorrichtung nach Anspruch 1 oder 2, **dadurch gekennzeichnet, dass** die drehbare Baugruppe (2) eine zylinderähnliche Kontur aufweist, wobei in der Mantelfläche, die annähernd parallel zur Drehachse (A) der drehbaren Baugruppe (2) verläuft, mindestens zwei teilkreisbogenförmige Ausnehmungen (4) ausgestaltet sind.

8. Vorrichtung nach Anspruch 7, **dadurch gekennzeichnet, dass** die beiden Seitenflächen, die rechtwinklig zur Drehachse (A) der drehbaren Baugruppe (2) verlaufen, eine ebene Kontur aufweisen.

9. Vorrichtung nach Anspruch 1 oder 2, **dadurch gekennzeichnet, dass** der Grundkörper (1) mindestens zwei, im Querschnitt unterschiedlich ausgestaltete Innenkonturabschnitte als Behälterabstützung aufweist.

10. Vorrichtung nach Anspruch 9, **dadurch gekennzeichnet, dass** die Innenkonturabschnitte teilkreisbogenförmig oder polygonal ausgestaltet sind.

11. Vorrichtung nach Anspruch 1, **dadurch gekennzeichnet, dass** die um eine horizontale Drehachse (A) verschwenkbare Baugruppe (2) beidseitig gelagert ist und dass die Baugruppe (2) an den Stirnseiten vorstehende Lagerzapfen mit einseitigen Fasen aufweist, die unter Ausnutzung der Elastizität der Lagerungswände im Grundkörper (1) in Lagerungsbohrungen von oben einschiebbar sind, wobei die Fasen die Lagerwände voneinander drücken und bei Drehung der Baugruppe (2) um 180° die Zapfen aus den Lagerungsbohrungen herausziehbar sind.

12. Vorrichtung nach Anspruch 11, **dadurch gekennzeichnet, dass** in den Lagerwänden nutenförmige Einführkanäle für die Lagerzapfen vorgesehen sind und die Lagerzapfen eine runde oder eine quadratische Querschnittsform aufweisen.

13. Vorrichtung nach Anspruch 11 oder 12, **dadurch gekennzeichnet, dass** bei kinematischer Umkehr an den Lagerwänden vorstehende Lagerzapfen und in den Stirnflächen der Baugruppe (2) Lagerungsbohrungen vorgesehen sind.

14. Vorrichtung nach einem der vorhergehenden Ansprüche, **dadurch gekennzeichnet, dass** der Grundkörper und die Baugruppe (2) aus Kunststoff gefertigt sind und dass die Baugruppe (2) hohl oder als Vollkörper ausgebildet ist und seitlich bzw. untenseitig angeformte Lagerzapfen oder Ausnehmungen für Lagerzapfen, die an dem Grundkörper (1) bzw. an deren Wänden vorgesehen sind, aufweist.

## Claims

1. Device for holding drink containers in a motor vehicle or in a support plate, consisting of a pot-like base body, in the interior of which at least one container support is arranged, wherein different contours within the base body are formed by displacement of the container support, in which bottles, cans or similar containers even with different cross-section can be respectively supported, wherein the container support is formed as a rotatable and removable subassembly, **characterised in that** the subassembly (2) has a horizontal axis of rotation and is arranged within the base body (1) in a storage chamber, in the edge region of a container support, in a recess or in a storage chamber between at least two adjacent container supports in the base body to be positionally fixed and removable and the storage width of the container support is variable by rotation of the subassembly (2).

2. Device for holding drink containers in a motor vehicle or in a support plate, consisting of a pot-like base body, in the interior of which at least one container support is arranged, wherein different contours within the base body are formed by displacement of the container support, in which bottles, cans or similar containers even with different cross-section can be respectively supported, wherein the container support is formed as a rotatable and removable subassembly, **characterised in that** in the case of a vertical axis of rotation at least one pivot pin is mounted on the base of the base body (1) to protrude, the subassembly (2) being pluggable onto the pivot pin by a cylindrical guide protruding at the underside into the interior space, or that at least one bearing receptacle is provided in the base for at least one pin protruding at the underside of the subassembly (2) or that several bearing pins are provided in defined arrangement and so co-operate with the recesses at the counter-body that the subassembly (2) can be arranged in different rotational positions and/or also laterally offset.

3. Device according to claim 1 or 2, **characterised in that** the rotatable subassembly (2) has a block-like contour.

4. Device according to claim 3, **characterised in that** the two side surfaces have a planar contour extending at right angles to the axis (A) of rotation of the rotatable subassembly (2).

5. Device according to claim 3, **characterised in that** at least one of the side surfaces, which extends approximately parallel to the axis (A) of rotation of the rotatable subassembly (2), has a concave contour or all four side surfaces, which extend approximately parallel to the axis (A) of rotation of the rotatable subassembly (2), have a concave contour.

6. Device according to claim 3, **characterised in that** at least one of the side surfaces, which extends approximately parallel to the axis (A) of rotation of the rotatable subassembly (2), has a convex contour or at least one of the side surfaces, which extend approximately parallel to the axis (A) of rotation of the rotatable subassembly (2), is formed to be semicircular and has a trough-like depression (3).

7. Device according to claim 1 or 2, **characterised in that** the rotatable subassembly (2) has a cylinder-like contour, wherein at least two part-circular recesses (4) are formed in the circumferential surface which extends approximately parallel to the axis (A) of rotation of the rotatable subassembly (2).

8. Device according to claim 7, **characterised in that** the two side surfaces, which extend at right angles to the axis (A) of rotation of the rotatable subassembly (2), have a planar contour.

9. Device according to claim 1 or 2, **characterised in that** the base body (1) has at least two inner contour sections, which are formed to be different in cross-section, as container supporting means.

10. Device according to claim 9, **characterised in that** the inner contour sections are formed to be part-circular or polygonal.

11. Device according to claim, **characterised in that** the subassembly (2), which is pivotable about a horizontal axis (A) of rotation, is mounted at both sides and that the subassembly (2) has bearing pins, which protrude at the end faces, with chamfers at one end, which chamfers with utilisation of the resilience of the bearing walls can be pushed from above into bearing bores in the base body (1), wherein the chamfers press the bearing walls apart and on rotation of the subassembly (2) through 180° the pins are withdrawable from the bearing bores.

12. Device according to claim 11, **characterised in that** groove-shaped introducing channels for the bearing pins are provided in the bearing walls and the bearing pins have a round or a square cross-sectional shape.

13. Device according to claim 11 or 12, **characterised in that** in the case of kinematic reversal bearing pins protruding at the bearing walls and bearing bores in the end surfaces of the subassembly (2) are provided.

14. Device according to any one of the preceding claims, **characterised in that** the base body and the subassembly (2) are made of plastics material and that the subassembly (2) is formed to be hollow or as a solid body and has bearing pins, or recesses for bearing pins, formed laterally or at the underside, the bearing pins being provided at the base body (1) or at the walls thereof.

## Revendications

1. Dispositif pour tenir des récipients à boissons dans un véhicule automobile ou dans une plaque porteuse, constitué d'un corps de base semblable à un godet, dans l'espace intérieur duquel est agencé au moins un porte-récipients, différents contours à l'intérieur du corps de base étant réalisés par déplacement du porte-récipients, dans lesquels contours respectivement des bouteilles, des canettes ou des récipients analogues présentant également des sections différentes peuvent être supportés, le porte-récipients étant réalisé sous la forme d'un groupe structurel rotatif amovible,
**caractérisé en ce que** le groupe structurel (2) présente un axe de rotation horizontal et est agencé de manière fixe en position et amovible à l'intérieur du corps de base (1) dans une chambre de logement, dans la région de bordure d'un porte-récipients, dans un évidement ou dans une chambre de logement entre au moins deux porte-récipients voisins dans le corps de base, et la largeur de logement du porte-récipients est modifiable par rotation du groupe structurel (2).

2. Dispositif pour tenir des récipients à boissons dans un véhicule automobile ou dans une plaque porteuse, constitué d'un corps de base semblable à un godet, dans l'espace intérieur duquel est agencé au moins un porte-récipients, différents contours à l'intérieur du corps de base étant réalisés par déplacement du porte-récipients, dans lesquels contours respectivement des bouteilles, des canettes ou des récipients analogues présentant également des sections différentes peuvent être supportés, le porte-récipients étant réalisé sous la forme d'un groupe structurel rotatif amovible,
**caractérisé en ce que** pour un axe de rotation vertical, au moins un tenon de rotation est agencé verticalement au fond du corps de base (1), sur lequel tenon de rotation le groupe structurel (2) est enfichable avec un guidage cylindrique dépassant de la face inférieure dans l'espace intérieur, ou **en ce qu'**il est prévu au moins un logement de réception dans le fond pour au moins un tenon qui dépasse de la face inférieure du groupe structurel (2), ou **en ce qu'**il est prévu plusieurs tenons de montage dans un agencement déterminé, qui coopèrent avec des évidements prévus sur le corps antagoniste de telle façon que le groupe structurel (2) peut être agencé dans différentes positions de rotation et/ou également décalés latéralement.

3. Dispositif selon la revendication 1 ou 2, **caractérisé en ce que** le groupe structurel rotatif (2) présente un contour semblable à un parallélépipède.

4. Dispositif selon la revendication 3, **caractérisé en ce que** les deux surfaces latérales qui s'étendent perpendiculairement à l'axe de rotation (A) du groupe structurel rotatif (2) présentent un contour plan.

5. Dispositif selon la revendication 3, **caractérisé en ce que** l'une au moins des surfaces latérales, qui s'étendent approximativement parallèlement à l'axe de rotation (A) du groupe structurel rotatif (2), présente un contour concave, ou bien **en ce que** toutes les quatre surfaces latérales, qui s'étendent approximativement parallèlement à l'axe de rotation (A) du groupe structurel rotatif (2), présentent un contour concave.

6. Dispositif selon la revendication 3, **caractérisé en ce que** l'une au moins des surfaces latérales, qui s'étendent approximativement parallèlement à l'axe de rotation (A) du groupe structurel rotatif (2), présente un contour convexe, ou bien **en ce que** l'une au moins des surfaces latérales, qui s'étendent approximativement parallèlement à l'axe de rotation (A) du groupe structurel rotatif (2), est conçue sous forme d'arc en demi-cercle, et présente un renfoncement (3) semblable à une moulure.

7. Dispositif selon la revendication 1 ou 2, **caractérisé en ce que** le groupe structurel rotatif (2) présente un contour semblable à un cylindre, et au moins deux évidements en forme d'arc de cercle partiel (4) sont réalisés dans la surface enveloppe qui s'étend approximativement parallèlement à l'axe de rotation (A) du groupe structurel rotatif (2).

8. Dispositif selon la revendication 7, **caractérisé en ce que** les deux surfaces latérales, qui s'étendent à angle droit par rapport à l'axe de rotation (A) du groupe structurel rotatif (2), présentent un contour plan.

9. Dispositif selon la revendication 1 ou 2, **caractérisé en ce que** le corps de base (1) comporte, à titre de porte-récipients, au moins deux tronçons de contour intérieur conçus différemment en section transversale.

10. Dispositif selon la revendication 9, **caractérisé en ce que** les tronçons de contour intérieur sont conçus sous forme d'arc de cercle partiel ou sous forme polygonale.

11. Dispositif selon la revendication 1, **caractérisé en ce que** le groupe structurel (2) capable de pivoter autour d'un axe de rotation horizontal (A) est monté sur palier des deux côtés, et **en ce que** le groupe structurel (2) comporte sur les faces latérales des tenons de paliers en dépassement avec des chanfreins unilatéraux, lesquels peuvent être enfilés depuis le haut dans des perçages de paliers en exploitant l'élasticité des parois de montage dans le corps de base (1), les chanfreins poussant les parois de montage en écartement et, par rotation du groupe structurel (2) sur 180°, les tenons pouvant être extraits hors des perçages de paliers.

12. Dispositif selon la revendication 11, **caractérisé en ce que** des canaux d'introduction en forme de rainures sont prévus dans les parois de montage pour les tenons de paliers, et les tenons de paliers présentent une forme de section transversale arrondie ou carrée.

13. Dispositif selon la revendication 11 ou 12, **caractérisé en ce que** par inversion cinématique, des tenons de paliers sont prévus en dépassement sur les parois de montage et des perçages de paliers sont prévus sur les surfaces frontales du groupe structurel (2).

14. Dispositif selon l'une des revendications précédentes, **caractérisé en ce que** le corps de base et le groupe structurel (2) sont fabriqués en matière plastique, et **en ce que** le groupe structurel (2) est réalisé sous forme de corps creux ou sous forme de corps plein et présente latéralement, respectivement du côté inférieur, des tenons de paliers ou des évidements conformés pour des tenons de paliers qui sont prévus sur le corps de base (1), respectivement sur ses parois.
